# EUROPÄISCHE PATENTANMELDUNG

(11) **EP 1 763 123 A1**
(43) Veröffentlichungstag der Anmeldung: **14.03.2007**
(21) Anmeldenummer: 05019562.7
(22) Anmeldetag: 08.09.2005
(51) Int. Cl.: H02K 11/02, H02K 5/14

(54) **Bürstensystem für einen Elektromotor, Bürstengehäuse mit einem derartigen Bürstensystem, Elektromotor mit einem Bürstengehäuse sowie Stellantrieb mit einem derartigen Elektromotor**

(71) Anmelder: SIEMENS AKTIENGESELLSCHAFT, 80333 München (DE)
(72) Erfinder: Viernekes, Gerald, 97437 Hassfurt (DE)

(57) **Zusammenfassung**

Das Bürstensystem weist einen Grundkörper, zwei Stromführungen, zwei Entstördrosseln sowie je eine Anpressfeder für zwei Bürsten auf. Die Erfindung betrifft ferner ein Bürstengehäuse mit einem Bürstensystem, einen Elektromotor mit einem solchen Bürstengehäuse und einen Stellantrieb mit einer Getriebeeinheit und einem Elektromotor. Erfindungsgemäß bilden die Entstördrosseln und Anpressfedern jeweils ein gemeinsames wendel- und/oder spiralförmiges Bauteil (5a, 5b). Das gemeinsame wendel- und/oder spiralförmige Bauteil (5a, 5b) erfüllt zum einen die Funktion einer Spule zur Funkentstörung des Elektromotors (32) und zum anderen die Funktion einer Vorspannfeder zum Andrücken der Bürsten (3a, 3b) hin zum Kommutator. Dies entspricht einer Reduzierung des Bauteilaufwandes für ein Bürstensystem eines Elektromotors (32). Die Erfindung betrifft zudem ein Bürstengehäuse (25) mit einem Bürstensystem, einen Elektromotor (32) mit einem derartigen Bürstensystem sowie einen Stellantrieb (30), insbesondere für ein Kraftfahrzeug, mit einer Getriebeeinheit (31) und einem Elektromotor (32).

## Beschreibung

Die Erfindung betrifft ein Bürstensystem mit einem Grundkörper, zwei Stromführungen, zwei Entstördrosseln sowie je einer Anpressfeder für zwei Bürsten. Die,Erfindung betrifft weiterhin ein Bürstengehäuse mit einem Bürstensystem, einen Elektromotor mit einem derartigen Bürstengehäuse sowie einen Stellantrieb mit einer Getriebeeinheit und einem Elektromotor.

Bürstengehäuse der oben genannten Art sind bereits bekannt. Solche Vorrichtungen weisen ein aus Kunststoff bestehendes Gehäuse auf, in welchem weitere Bauteile der Vorrichtung untergebracht sind. Bei den genannten weiteren Bauteilen handelt es sich beispielsweise um Stromführungen, Bürsten, insbesondere um Kohlebürsten, Entstörelemente oder um Thermoschalter.

Aus der DE 198 05 185 A1 ist eine insbesondere zum Verstellen des Schiebedachs eines Fahrzeugs vorgesehene Antriebsvorrichtung bekannt. Diese weist einen Elektromotor auf, der mit einem Anker mit Kommutator versehen ist, welcher in einem Polgehäuse untergebracht ist. Der außerhalb des Polgehäuses liegende Teil bildet eine Getriebeantriebswelle für ein Getriebe, welches in einem an das Polgehäuse anschließenden Getriebegehäuse untergebracht ist. Das Getriebegehäuse nimmt eine Leiterplatte auf. Diese trägt einen Bürstenhalter, dessen Bürsten am Kommutator des Ankers angreifen. Der Bürstenhalter greift in eine im Bereich des Kommutators vorgesehene Ausnehmung des Getriebegehäuses ein. Der Bürstenhalter weist einen aus Kunststoff bestehenden Grundkörper auf, welcher mit hülsenförmigen Aufnahmen für Entstördrosseln versehen ist. Weiterhin weist der Bürstenhalter Elemente auf, welche die Bürsten zur Montage des Bürstenhalters in einer Montagestellung innerhalb eines jeweiligen Bürstenköchers halten. Über Federelemente erfolgt eine entsprechende Vorspannung der Bürsten in den Bürstenköchern zum Kommutator hin. An ihrer Rückseite gehen von den Bürsten elektrische Leitungen ab, die eine elektrische Verbindung zu den Entstördrosseln herstellen.

Der Erfindung liegt die Aufgabe zugrunde, ein Bürstensystem für einen Elektromotor anzugeben, welches mit einer geringeren Bauteilanzahl auskommt. Der Erfindung liegt die weitere Aufgabe zugrunde, entsprechende Bürstengehäuse mit einem Bürstensystem, einen Elektromotor mit einem derartigen Bürstengehäuse sowie einen Stellantrieb mit einem derartigen Elektromotor anzugeben.

Diese Ausgabe wird durch ein Bürstensystem mit den im Anspruch 1 angegebenen Merkmalen gelöst. Vorteilhafte Ausgestaltungen und Weiterbildungen der Erfindung ergeben sich aus den abhängigen Ansprüchen 2 bis 9. Im Anspruch 10 ist ein Bürstengehäuse angegeben, welches ein Bürstensystem nach Anspruch 9 aufweist. Im Anspruch 11 ist ein Bürstengehäuse angegeben, welches ein Bürstensystem nach einem der Ansprüche 4 bis 8 aufweist. Der abhängige Anspruch 12 hat eine vorteilhafte Ausgestaltung des Bürstengehäuses nach Anspruch 11 zum Gegenstand. Der Anspruch 13 betrifft einen Elektromotor, der ein Bürstengehäuse nach einem der Ansprüche 10 bis 12 aufweist. Im Anspruch 14 ist ein Stellantrieb mit einer Getriebeeinheit und einem Elektromotor nach Anspruch 13 angegeben.

Erfindungsgemäß bilden die Entstördrosseln und Anpressfedern jeweils ein gemeinsames wendel- und/oder spiralförmiges Bauteil.

Bei dem erfindungsgemäßen Bürstensystem erfüllt das gemeinsame wendel- und/oder spiralförmige Bauteil zum einen die Funktion einer elektrischen Spule zur Funkentstörung des Elektromotors und zum anderen die Funktion einer Vorspannfeder zum Andrücken der Bürsten hin zum Kommutator. Dies entspricht einer Reduzierung des Bauteilaufwandes für ein Bürstensystem eines Elektromotors.

Im Falle einer Wendel bildet dabei das gemeinsame Bauteil eine Torsionsfeder und/oder eine Zugdruckfeder aus, je nachdem, ob die Wendel bezüglich ihrer Längsachse axial und/oder zirkular vorgespannt wird.

Im Falle einer Spirale bildet das gemeinsame Bauteil eine Drehfeder und/oder eine Zugdruckfeder aus, je nachdem, ob die Wendel bezüglich ihrer Längsachse axial und/oder zirkular vorgespannt wird. Darüber hinaus ist auch eine kombinierte Form aus einer Wendel und einer Spirale möglich.

Vorzugsweise weist das gemeinsame wendel- und/oder spiralförmige Bauteil eine Federhärte im Bereich von 0,5 N/mm bis 5 N/mm zur Aufbringung einer Federkraft auf die jeweilige Kohlebürste auf. Dadurch ist ein zuverlässiger niederohmiger Übergang zwischen Kommutator und Kohlebürsten hergestellt.

Die zuvor genannten Werte für die Federhärte können z.B. durch geeignete Auswahl des Wendel- oder Spiraldurchmessers sowie der Wendel- oder Spiralsteigung, durch geeignete Werkstoffauswahl und durch Auswahl des Drahtdurchmessers bei Verwendung eines Drahtes für die Wendel bzw. für die Spirale eingestellt werden.

In einer bevorzugten Ausführungsform ist das gemeinsame Bauteil eine Drahtwendel, insbesondere mit einem konstanten Durchmesser und mit einem konstanten runden Drahtdurchmesser. Derartige Drahtwendeln können auch als Luftspule bezeichnet werden. Neben der einfachen und kostengünstigen Herstellung weist die Drahtwendel eine vorteilhaft konstante Federhärte auf. Zudem kann bei einem vorgegebenen Wert für den Kohlebürstenverbrauch eine ausreichende Mindestfederkraft über die Auswahl der axialen Länge der Drahtwendel eingestellt werden.

Einer Ausführungsform der Erfindung entsprechend weist die jeweilige Drahtwendel ein erstes Ende und ein zweites Ende auf, wobei das erste Ende zur Drehmoment- und/oder Kraftabstützung im Bürstensystem eingespannt ist, wobei über das zweite Ende die Federkraft radial zur Drehachse des Elektromotors aufbringbar ist, so dass der Verschleiß der Kohlebürsten vorteilhaft minimal gehalten werden kann.

In einer weiteren Ausführungsform der Erfindung bildet das zweite Ende der jeweiligen Drahtwendel einen von seiner Längsachse wegweisenden Hebelarm aus, so dass unter Aufbringung einer Torsionsvorspannung die Federkraft auf die jeweilige zu kontaktierende Kohlebürste aufbringbar ist. Der Hebelarm ist dabei vorzugsweise das Drahtende, welches von der Drahtwendel tangential wegzeigt.

Weist der Hebelarm nun ein parallel zur Längsachse der Drahtwendel abgewinkeltes Endstück auf, so kann dieses in ein korrespondierendes Lager einer jeweils zu kontaktierenden Kohlebürste eingreifen. Das abgewinkelte Endstück dient der Kontaktierung mit der Kohlebürste. Insbesondere ist das Endstück parallel zur Längsachse ausgerichtet, wobei das Endstück in Richtung zum ersten Ende der Drahtwendel zeigt. Dadurch können die Kohlebürste und die Entstördrossel platzsparend auf engstem Raum direkt nebeneinander angeordnet werden.

Im Besonderen bilden das abgewinkelte Endstück und das korrespondierende Lager ein Scharniergelenk aus. Dazu ist in der dem Kommutator des Elektromotors gegenüberliegenden Endfläche der Kohlebürste eine halbzylindrische Rille eingebracht, in welcher das Endstück mit einem runden und nahezu gleichen Querschnitt eingreift. Das so ausgebildete Scharniergelenk bietet vorteilhaft eine sehr gute mechanische Führung der Kohlebürste und zugleich einen sehr geringen Übergangswiderstand zur Kontaktierung mit dem Kommutator des Elektromotors.

Der Werkstoff der Wendel ist vorzugsweise eine Kupferlegierung mit einer Zugfestigkeit von zumindest 400 N/mm². Bekanntermaßen weist sonstiges Leitungskupfer - auch Elektrokupfer genannt - mit Zugfestigkeiten von ca. 250 N/mm² nur sehr geringe bis gar keine mechanische Federeigenschaften auf. Zwar ist Kupfer, wie auch Gold und Silber, ein hervorragender elektrischer Leiter, hinsichtlich der Materialeigenschaften jedoch so "weich", dass eine Drahtwendel aus diesem Kupfer sich bei mechanischer Belastung bleibend verformen würde.

Besonders geeignet sind Kupferlegierungen mit einem Chromanteil. Dieser Werkstofftyp weist Zugfestigkeiten im Bereich von 480 N/mm² bis 620 N/mm² auf, und ist folglich besonders gut für federnde Anwendungen geeignet.

In einer bevorzugten Ausführungsform bildet die Drahtwendel einen Hohlraum aus, in welchem ein magnetisches Material, wie z.B. ein Eisenkern oder ein Ferritkern eingebracht ist. Der besondere Vorteil ist, dass im Vergleich zu einer bloßen Luftspule eine erheblich verbesserte Entstörwirkung erzielt werden kann. Im Vergleich zu einer alleinigen Luftspule erhöht sich die Induktivität nach Einbringen eines magnetischen Materials um ein Vielfaches. Sind die geometrische Form des Hohlraums der Drahtwendel und die geometrische Form des magnetischen Materials aufeinander abgestimmt, so kann die Entstördrossel besonders kompakt gestaltet werden.

Im Besonderen weist die Drahtwendel einen zylindrischen Hohlraum aus, in welchen ein zylindrischer Stab oder Bolzen aus dem magnetischen Material einbringbar ist. Als magnetisches Material kann z.B. Ferrit verwendet werden, welches eine hohe magnetische Induktivität aufweist, die auch im Hochfrequenzbereich erhalten bleibt, so dass besonders effektiv hochfrequente Störsignale, welche im Übergang Bürste/Kommutator erzeugt werden, gedämpft werden können. Zudem weist Ferrit den Vorteil auf, dass es elektrisch nichtleitend ist. Dadurch kann auf gesonderte Isolierungsmaßnahmen zwischen den elektrisch leitenden Stromführungen und der Drahtwendel verzichtet werden.

Bei der Einbringung des magnetischen Materials in den Hohlraum der Drahtwendel ist insbesondere daraufhin Rücksicht zu nehmen, dass die Drahtwendel weiterhin frei beweglich ausgebildet ist. Dies kann z.B. dadurch erreicht werden, dass zwischen dem magnetischen Material und der Drahtwendel ein geringfügiger Spalt verbleibt. Das magnetische Material kann dabei z.B. auch am ersten Ende der Drahtwendel befestigt sein.

In einer weiteren vorteilhaften Ausführungsform dienen die Stromführungen jeweils als Grundkörper, auf welchem u.a. das gemeinsame wendel- und/oder spiralförmige Bauteil befestigt ist. Aufgrund dieser Doppelfunktion der ohnehin notwendigen Stromführung entfällt die Notwendigkeit eines separaten Kunststoff-Grundkörpers, wie er bei bekannten Bürstensystemen vorgesehen ist. Dies entspricht einer weiteren Reduzierung des Bauteileaufwands für ein Bürstensystem.

In einer weiteren Ausführungsform weist jede der Stromführungen eine Stromführungs-Kontaktfahne auf. Über diese Kontaktfahnen kann der Elektromotor mit einer Stromversorgung oder einer Ansteuerelektronik für den Elektromotor über ein Verbindungskabel mit Steckhülsen angeschlossen werden.

Einer weiteren Ausführungsform des Bürstensystems entsprechend ist je eine Bürste fest mit dem gemeinsamen wendel- und/oder spiralförmigen Bauteil verbunden. Die Verbindung kann z.B. eine Löt-, Schweiß- oder Klemmverbindung sein. Ein solches Bürstensystem mit bereits befestigten Kohlebürsten kann vorteilhaft als Ganzes in ein Bürstengehäuse, in ein kombiniertes Bürsten-/Lagergehäuse eines Elektromotors oder in ein Getriebegehäuse einer Getriebeeinheit eingebracht werden.

Die Aufgabe wird weiterhin durch ein Bürstengehäuse für einen Elektromotor mit einem in das Bürstengehäuse einbringbaren, insbesondere einschnappbaren, Bürstensystem, gelöst. Dadurch ist ein besonders schneller Zusammenbau eines Bürstengehäuses möglich.

Entsprechend einer alternativen Ausführungsform weist das Bürstengehäuse zwei Bürstenköcher mit je einer Kohlebürste auf. In das Bürstengehäuse ist dann ein Bürstensystem einbringbar, insbesondere einschnappbar, wobei die jeweiligen zweiten Enden der Drahtwendeln in ein korrespondierendes Lager der jeweiligen Kohlebürsten einschnappbar sind. Das Bürstengehäuse weist üblicherweise ein Gehäuse aus einem nichtleitfähigen Kunststoff auf. Vorzugsweise sind die Bürstenköcher im Bürstengehäuse ausgebildet bzw. ausgeformt, so dass die jeweilige Kohlebürste auf einfache Weise in einen der beiden Bürstenköcher eingeführt bzw. zur Montage eingeschoben werden kann. Das Bürstensystem kann insbesondere Rastnasen oder andere mechanische Vorkehrungen aufweisen, so dass dieses in das Bürstengehäuse einbringbar, insbesondere einschnappbar oder einrastbar, ist. Dadurch vereinfacht sich die Montage eines Bürstengehäuses auf erhebliche Weise.

Gemäß der Erfindung ist die Kohlebürste eine Zweischichtkohle, welche auf der Kontaktierungsseite des Lagers eine Metallisierungsschicht aufweist. Vorzugsweise ist die Metallisierungsschicht eine hochleitfähige Kupferschicht. Mittels der Metallisierungsschicht aus Kupfer wird ein besonders niederohmiger Übergangswiderstand zwischen einem abgewinkelten Endstück des Hebelarms als Kontaktierung und dem Lager der Kohlebürste erreicht. Zugleich geht die Kupferschicht auf der Lagerseite nahtlos in eine Kohleschicht über, welche dem Kommutator des Elektromotors im eingebauten Zustand gegenüberliegt.

Die Aufgabe wird weiterhin gelöst durch einen Elektromotor, welcher ein erfindungsgemäßes Bürstengehäuse aufweist. Das Bürstengehäuse kann darüber hinaus eine Halterung zur Aufnahme eines Lagers für die Motorwelle aufweisen, so dass während der Montage das Bürstengehäuse komplett mit Lager auf den Kommutator des Elektromotors aufgeschoben werden kann.

Die Aufgabe wird schließlich gelöst durch einen Stellantrieb, welcher eine Getriebeeinheit und einen solchen Elektromotor aufweist. Der Elektromotor dient dabei zum Antrieb der Getriebeeinheit. Weitere vorteilhafte Eigenschaften der Erfindung ergeben sich aus deren beispielhafter Erläuterung anhand der Figuren.

Dabei zeigt:
- FIG 1: eine perspektivische Ansicht eines Bürstensystems für einen Elektromotor,
- FIG 2: eine perspektivische Ansicht eines Bürstengehäuses mit dem eingeschobenen Bürstensystem und bereits in die Bürstenköcher eingeschobenen Kohlebürsten gemäß FIG 1,
- FIG 3: eine Frontansicht des Bürstengehäuses gemäß FIG 2, in welcher die Einbaulage der Bürstenköcher, der Kohlebürsten sowie der Entstördrosseln deutlicher erkennbar ist, und
- FIG 4: eine Seitenansicht eines Stellantriebs, insbesondere für ein Kraftfahrzeug, bestehend aus einer Getriebeeinheit und einem Elektromotor.

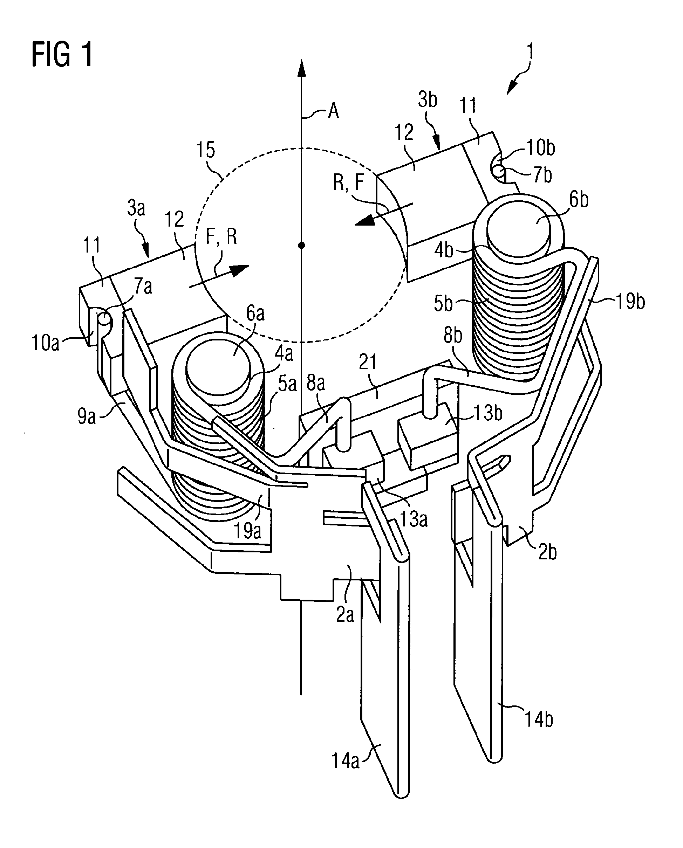

Die Figur 1 zeigt eine perspektivische Ansicht eines Bürstensystems 1 für einen Elektromotor. Das dargestellte Bürstensystem 1 weist Grundkörper 2a und 2b auf, bei denen es sich jeweils um ein aus Metall bestehendes Stanzbiegeteil bzw. Stanzgitter handelt. Auf diesen Grundkörpern 2a, 2b aus Metall sind die beiden gemeinsamen wendel- und spiralförmigen Bauteile 5a, 5b in Form einer Drahtwendel befestigt. Zwischen den beiden Grundkörpern 2a, 2b ist eine Entstörplatine 21 angebracht, auf der weitere Entstörelemente 13a, 13b, wie z.B. Kondensatoren, angeordnet sind. Im Beispiel der Figur 1 sind dazu die jeweiligen ersten Enden 8a, 8b der Drahtwendel 5a, 5b so ausgerichtet, dass diese beim Zusammenbau des Bürstensystems eine elektrische Verbindung mit entsprechenden Kontaktierungsflächen auf der Entstörplatine 21 eingehen.

Entsprechend einer Ausführungsform der Erfindung dienen die metallischen Grundkörper 2a, 2b zum einen als Stromführung und zum anderen als Träger der Drahtwendeln 5a, 5b sowie der Ferritkerne 6a, 6b als magnetisches Material. Die Ferritkerne 6a, 6b sind dabei in einem jeweiligen von der Drahtwendel 5a, 5b ausgebildeten Hohlraum eingebracht. Mit dem Bezugszeichen 4a, 4b ist je eine Ferritkerndrossel bezeichnet, welche sich aus der jeweiligen Drahtwendel 5a, 5b und dem jeweiligen Ferritkern 6a, 6b zusammensetzt.

Entsprechend einer weiteren Ausführungsform weist jede der Stromführungen 2a, 2b eine Stromführungs-Kontaktfahne 14a, 14b zur elektrischen Kontaktierung des jeweiligen Grundkörpers 2a, 2b mit einer Elektronikeinheit oder einem Stecker auf.

Im Beispiel der FIG 1 weist der jeweilige Grundkörper 2a, 2b Umbiegungen 19a, 19b auf, an welchen das jeweilige erste Ende 8a, 8b der Drahtwendel 5a, 5b zur Drehmomentabstützung anliegt. Auf diese Weise kann je eine Federkraft F in Radialrichtung R zur Drehachse A des Elektromotors und somit des Kommutators auf die jeweilige Kohlebürste 3a, 3b aufgebracht werden. Mit dem Bezugszeichen 15 ist gestrichelt der Umfang des Kommutators des Elektromotors eingezeichnet, welcher im eingebauten Zustand des Bürstensystems 1 an den Kohlenbürsten 3a, 3b anliegen würde.

Entsprechend einer Ausführungsform ist die Längsachse der Drahtwendel 5a, 5b parallel zur Drehachse A des Elektromotors ausgerichtet. Ein jeweiliges zweites Ende 9a, 9b geht von der Drahtwendel 5a, 5b tangential ab und bildet dabei einen Hebelarm aus. Zudem weist das zweite Ende 9a, 9b ein dazu rechtwinklig ausgebildetes Endstück 7a, 7b auf, welches parallel zur Drehachse A ausgerichtet ist und in Richtung zum ersten Ende 8a, 8b der jeweiligen Drahtwendel 5a, 5b zeigt.

Gemäß einer weiteren Ausführungsform kann nun das jeweilige Endstück 7a, 7b in ein entsprechendes Lager 10a, 10b greifen. Das Lager 10a, 10b ist halbzylindrisch ausgebildet und bildet zusammen mit dem jeweiligen zylindrischen Endstück 7a, 7b ein Scharnierlager. Auf der Lagerseite weist die jeweilige Kohlebürste 3a, 3b eine Kupferschicht 11 zur besonders niederohmigen Kontaktierung mit dem jeweiligen Endstück 7a, 7b des Hebelarms 9a, 9b auf. Mit dem Bezugszeichen 12 ist die Kohleschicht der Kohlebürste 3a, 3b bezeichnet.

Ist das jeweilige Endstück 7a, 7b eines Hebelarms 9a, 9b fest mit dem Lager 11 der jeweiligen Kohlebürste 3a, 3b verbunden, wie z.B. mittels einer Lötung, so umfasst das Bürstensystem 1 als Baueinheit auch diese Bürsten 3a, 3b. Ein solches Bürstensystem 1 kann dann beispielsweise als Ganzes in einem Bürstengehäuse oder in einem Getriebegehäuse eines Stellantriebs zur Kontaktierung des Kommutators des Elektromotors untergebracht werden.

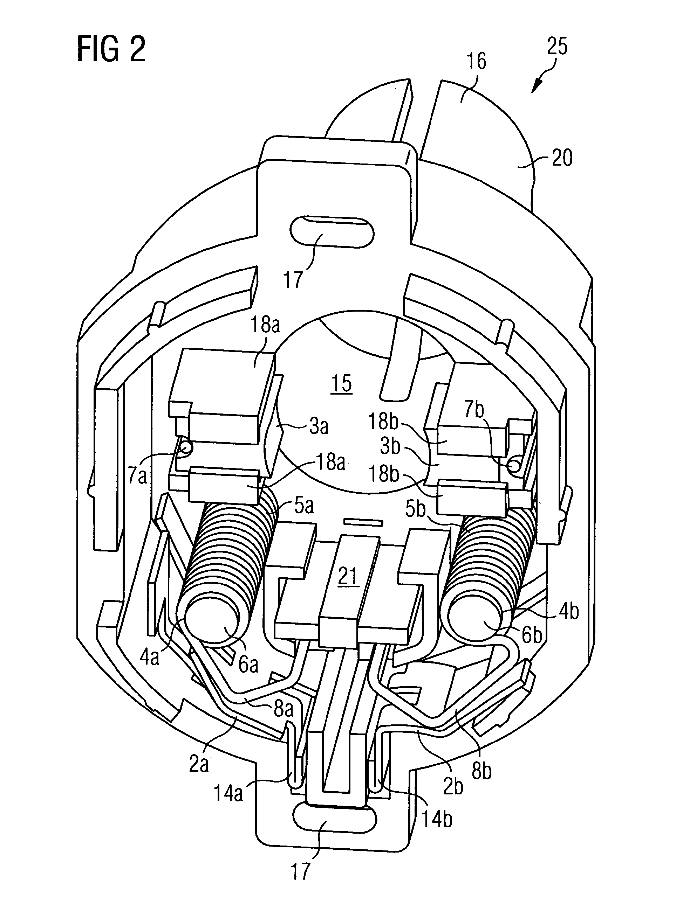

FIG 2 zeigt eine perspektivische Ansicht eines Bürstengehäuses 25 mit dem eingeschobenen Bürstensystem 1 und bereits in die Bürstenköcher 18a, 18b eingeschobenen Kohlebürsten 3a, 3b gemäß FIG 1. Die Bürstenköcher 18a, 18b sind dabei in einem Kunststoffgehäuse 20 des Bürstengehäuses 25 ausgebildet.

Das Bürstengehäuse 25 gemäß der vorliegenden FIG 2 ist so ausgebildet, dass das Bürstensystem 1 leicht eingeschoben werden kann, wobei das Bürstensystem 1 in entsprechende Ausnehmungen im Inneren des Kunststoffgehäuses 20 einschnappt. Zugleich schnappen bzw. rasten auch die jeweiligen Endstücke 7a, 7b der Hebelarme 9a, 9b der Drahtwendeln 5a, 5b in die Lager 10a, 10b der bereits in den Bürstenköcher 18a, 18b vormontierten Kohlebürsten 3a, 3b ein.

Zur Montage eines Elektromotors wird dann in die Lagerhalterung 16 des Bürstengehäuses 25 ein Lager, wie z.B. ein Kalottenlager, eingelegt. Im Anschluss wird das Bürstengehäuse 25 über ein Wellenende des Läufers des Elektromotors geschoben, wobei dann zugleich der Kommutator des Elektromotors zwischen die Kohlebürsten 3a, 3b geführt und eingespannt und die Motorwelle im Lager in der Lagerhalterung radial fixiert wird. Mittels der Befestigungen 17 ist abschließend das Bürstengehäuses 25 an einem Motorgehäuse des Elektromotors befestigbar.

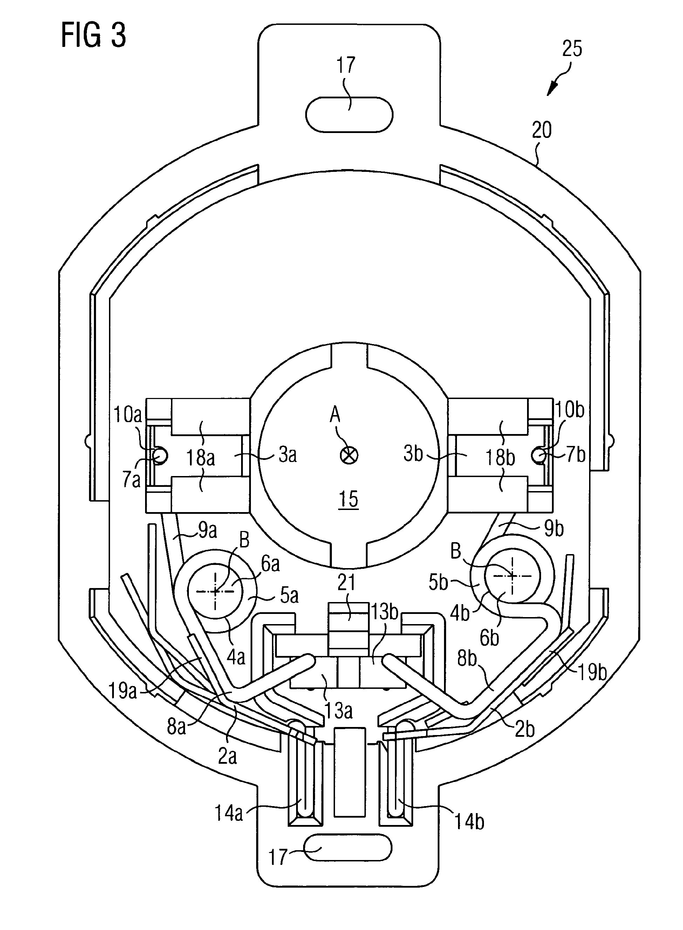

FIG 3 zeigt eine Frontansicht des Bürstengehäuses 25 gemäß FIG 2, in welcher die Einbaulage der Bürstenköcher 18a, 18b der Kohlebürsten 3a, 3b sowie der Entstördrosseln 5a, 5b deutlicher erkennbar ist. In der FIG 3 ist im Vergleich zur FIG 2 zusätzlich die Längsachse B der jeweiligen Drahtwendeln 5a, 5b eingezeichnet. Die Längsachsen B sowie die Drehachse A des Elektromotors sind dabei parallel zueinander ausgerichtet.

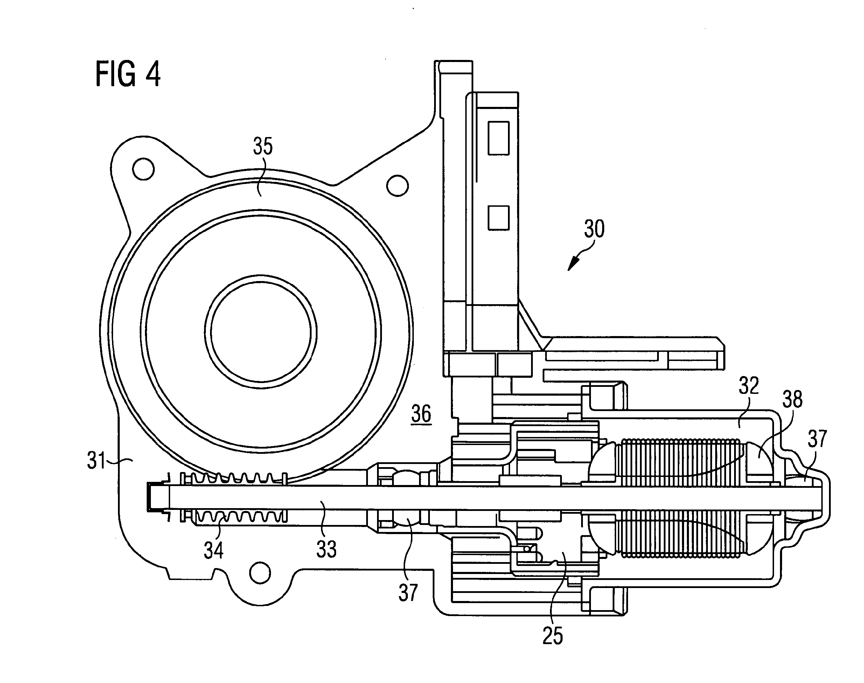

FIG 4 zeigt eine Seitenansicht eines Stellantriebs 30, insbesondere für ein Kraftfahrzeug, bestehend aus einer Getriebeeinheit 31 und einem Elektromotor 32. Der beispielhafte Stellantrieb 30 ist zum Antrieb eines Fensterhebers in einem Kraftfahrzeug ausgebildet. Die Getriebeeinheit 31 weist ein Schneckenrad 35 sowie eine Getriebewelle 33 mit einer Schneckenverzahnung 34 an ihrem Ende auf. Die Getriebewelle und die Motorwelle 33 sind im gezeigten Stellantrieb 30 einteilig ausgeführt und in zwei Kalottenlagern 37 geführt. Zum Antrieb ist die Getriebe- und Motorwelle mit einem auf der Motorwelle befestigten, eine Vielzahl von Lamellen enthaltenden Läuferpaket des Elektromotors, versehen. Beim Zusammenbau des Stellantriebs 30 wird der Elektromotor 32 zusammen mit der aus dem Bürstengehäuse 25 herausragenden Getriebe- und Motorwelle 33 in das Getriebegehäuse 36 eingeführt und fixiert.

## Patentansprüche

1. Bürstensystem für einen Elektromotor, mit einem Grundkörper, zwei Stromführungen, zwei Entstördrosseln sowie je einer Anpressfeder für zwei Bürsten, **dadurch gekennzeichnet, dass** die Entstördrosseln und Anpressfedern jeweils ein gemeinsames wendel- und/oder spiralförmiges Bauteil (5a, 5b) bilden.

2. Bürstensystem nach Anspruch 1, **dadurch gekennzeichnet, dass** das gemeinsame wendel- und/oder spiralförmige Bauteil (5a, 5b) eine Federhärte im Bereich von 0,5 N/mm bis 5 N/mm zur Aufbringung einer Federkraft (F) auf die jeweilige Kohlebürste (3a, 3b) aufweist.

3. Bürstensystem nach Anspruch 1 oder 2, **dadurch gekennzeichnet, dass** das Bauteil (5a, 5b) eine Drahtwendel (5a, 5b) ist.

4. Bürstensystem nach Anspruch 3, **dadurch gekennzeichnet, dass** die jeweilige Drahtwendel (5a, 5b) ein erstes Ende (8a, 8b) und ein zweites Ende (9a, 9b) aufweist, wobei das erste Ende (8a, 8b) zur Drehmoment- und/oder Kraftabstützung im Bürstensystem eingespannt ist und wobei über das zweite Ende (9a, 9b) die Federkraft (F) radial zur Drehachse (A) des Elektromotors (30) aufbringbar ist.

5. Bürstensystem nach Anspruch 4, **dadurch gekennzeichnet, dass** das zweite Ende (9a, 9b) der jeweiligen Drahtwendel (5a, 5b) einen von seiner Längsachse (B) wegweisenden Hebelarm ausbildet, so dass unter Aufbringung einer Torsionsvorspannung die Federkraft (F) auf die jeweilige Bürste (3a, 3b) aufbringbar ist.

6. Bürstensystem nach einem der vorherigen Ansprüche, **dadurch gekennzeichnet, dass** das gemeinsame wendel- und/oder spiralförmige Bauteil (5a, 5b) einen Hohlraum ausbildet, in welchen ein magnetisches Material, insbesondere ein Ferritkern, eingebracht ist.

7. Bürstensystem nach einem der vorherigen Ansprüche, **dadurch gekennzeichnet, dass** die Stromführungen (2a, 2b) jeweils als Grundkörper dienen, auf welchem das gemeinsame wendel- und/oder spiralförmige Bauteil (5a, 5b) befestigt ist.

8. Bürstensystem nach einem der vorherigen Ansprüche, **dadurch gekennzeichnet, dass** jede der Stromführungen (2a, 2b) eine Stromführungs-Kontaktfahne (14a, 14b) aufweist.

9. Bürstensystem nach einem der vorherigen Ansprüche, **dadurch gekennzeichnet, dass** je eine Bürste (3a, 3b) fest mit dem gemeinsamen wendel- und/oder spiralförmigen Bauteil (5a, 5b) verbunden ist.

10. Bürstengehäuse für einen Elektromotor, mit einem in das Bürstengehäuse einbringbaren, insbesondere einschnappbaren Bürstensystem (1) nach Anspruch 9.

11. Bürstengehäuse für einen Elektromotor, wobei das Bürstengehäuse zwei Bürstenköcher (18a, 18b) mit je einer Kohlebürste (3a, 3b) aufweist, wobei ein Bürstensystem (1) nach einem der vorherigen Ansprüche 4 bis 8 in das Bürstengehäuse einbringbar, insbesondere einschnappbar ist, und wobei die jeweiligen zweiten Enden (9a, 9b) der Drahtwendeln (5a, 5b) in ein korrespondierendes Lager (10a, 10b) der jeweiligen Kohlebürsten (3a, 3b) einschnappbar sind.

12. Bürstengehäuse nach Anspruch 11, **dadurch gekennzeichnet, dass** die Bürste (3a, 3b) eine Zweischichtkohle ist, welche auf der Kontaktierungsseite des Lagers (10a, 10b) eine Metallisierungsschicht (11) aufweist.

13. Elektromotor mit einem Bürstengehäuse (25) nach einem der vorherigen Ansprüche 10 bis 12.

14. Stellantrieb mit einer Getriebeeinheit (31) und einem Elektromotor (32) nach Anspruch 13.
